# FASCICULE DE BREVET EUROPEEN

(11) **EP 4 282 593 B1**
(45) Date de publication et mention de la délivrance du brevet: **18.12.2024**
(21) Numéro de dépôt: 23161134.4
(22) Date de dépôt: 10.03.2023
(51) Int. Cl.: B25B 27/30, B25B 27/00, B62D 65/12

(54) **OUTIL POUR SOULEVER UNE JAMBE DE FORCE D'UN AMORTISSEUR**
WERKZEUG ZUM ANHEBEN EINES FEDERBEINS EINES STOSSDÄMPFERS
TOOL FOR LIFTING A SHOCK ABSORBER STRUT

(30) Priorité: 27.05.2022 FR 2205091
(43) Date de publication de la demande: 29.11.2023
(73) Titulaire: Hubitools, 1300 Wavre (BE)
(72) Inventeur: DUDOT, Yannick, 57450 CAPPEL (FR)
(74) Mandataire: Icosa Europe

(56) Documents cités:
- FR-B1- 2 839 671

## Description

### Domaine de l'invention

La présente invention concerne un outil permettant de soulever une jambe de force d'un amortisseur lorsqu'un tel amortisseur est monté sur un véhicule automobile.

### État de la technique

Un tel outil est par exemple connu par la demande de brevet GB2588485. Cet outil connu a la forme d'une potence dont la partie supérieure comporte des moyens pour relier l'outil à la jambe de force d'un amortisseur et dont la partie inférieure peut être montée sur un dispositif de levage, tel qu'un vérin de fosse par exemple. En actionnant le vérin de fosse, l'outil soulèvera la jambe de force de l'amortisseur, ce qui permettra d'effectuer divers travaux sur le véhicule, tel que par exemple la dépose et repose des arbres de transmission, la séparation du moyeu et des bras inférieurs, la séparation des rotules, etc ... Un autre exemple est connu du brevet FR 2 839 671 B1, qui divulgue le préambule des revendications 1 et 7.

Le principal inconvénient de ces outils connus réside dans la difficulté de les placer sur certains véhicules, par exemple à cause de l'encombrement des pièces mécaniques et/ou de carrosserie avoisinantes. Ils offrent également peu de sécurité lors de leur utilisation.

### Résumé de l'invention

L'invention est définie par les revendications indépendantes. Les revendications dépendantes définissent des modes de réalisation préférés de l'invention. Selon la présente invention, pour pallier au moins en partie aux inconvénients des outils connus à ce jour, il est fourni un outil pour soulever une jambe de force d'un amortisseur monté sur un véhicule automobile, l'outil comportant :
- une première pièce s'étendant selon un axe Z vertical, une extrémité distale inférieure de la première pièce étant apte à être connectée à un dispositif de levage,
- une deuxième pièce s'étendant selon un axe X transversal à l'axe Z, la deuxième pièce étant connectée à la première pièce,
- une troisième pièce ayant une extrémité distale apte à enserrer la jambe de force, la troisième pièce étant connectée à la deuxième pièce.

La deuxième pièce est montée coulissante selon l'axe X par rapport à la première pièce, et la troisième pièce est montée pivotante autour d'un axe Y par rapport à la deuxième pièce, l'axe Y étant perpendiculaire à l'axe X.

Un tel outil est plus flexible et est capable de s'adapter facilement à différents véhicules. Il offre par ailleurs plus de sécurité par le fait qu'il est apte à enserrer la jambe de force.

De préférence, selon l'invention, l'axe X est perpendiculaire à l'axe Z.

Le fait que l'axe X soit perpendiculaire à l'axe Z permet d'assurer, lors de l'utilisation de l'outil, une répartition optimale de la force exercée sur la première pièce et sur le dispositif de levage auquel elle est connectée.

Avantageusement, selon l'invention, l'extrémité distale de la troisième pièce est apte à enserrer une jambe de force dont le diamètre est compris entre 10 mm et 100 mm, de préférence dont le diamètre est compris entre 20 mm et 45 mm ou entre 45 mm et 70 mm.

De cette manière, un outil selon l'invention peut être utilisé pour des jambes de force courants et de différents diamètres.

Avantageusement toujours, selon l'invention, l'extrémité distale de la troisième pièce comporte une mâchoire en deux parties et des moyens pour serrer les deux parties ensemble.

Avec un tel dispositif préféré, la jambe de force peut être enserrée fermement entre les deux parties de la mâchoire afin d'éviter toute retombée non volontaire de la jambe de force une fois soulevée, par exemple par glissement et/ou désengagement de la jambe de force au départ de l'outil selon l'invention. Ceci permet notamment d'assurer la sécurité d'un opérateur utilisant un outil selon l'invention.

De façon avantageuse toujours, selon l'invention, la mâchoire est en matière plastique, de préférence en polyoxyméthylène.

Le polyoxyméthylène offre de très bonnes caractéristiques physiques dont notamment une résistance élevée à la traction et aux chocs, une excellente résistance à la fatigue, une excellente stabilité dimensionnelle et une bonne résistance au fluage. De façon avantageuse, ces caractéristiques font que la mâchoire en un tel matériau est particulièrement résistante et solide, ce qui rend un outil selon l'invention d'autant plus sécurisant et fiable.

Avantageusement toujours, selon l'invention, l'outil comporte des moyens pour bloquer la deuxième pièce par rapport à la première pièce.

Un tel blocage permet d'assurer le maintien de ces pièces de l'outil dans une position relative optimale et adéquate pour soulever et maintenir une jambe de force de façon sécurisée. En effet, un tel blocage permet d'éviter tout mouvement relatif de la deuxième pièce par rapport à la première pièce, ce qui garantit à un opérateur utilisant un outil selon l'invention que la jambe de force restera maintenue dans une position adéquate et sécurisante tout au long de son intervention.

Selon la présente invention, il est également fourni un outil pour soulever une jambe de force d'un amortisseur monté sur un véhicule automobile, l'outil comportant :
- une première pièce s'étendant selon un axe Z vertical,
- une deuxième pièce s'étendant selon un axe X transversal à l'axe Z, la deuxième pièce étant connectée à la première pièce,
- une troisième pièce ayant une extrémité distale apte à enserrer la jambe de force, la troisième pièce étant connectée à la deuxième pièce La première pièce comporte un mécanisme de levage selon l'axe Z,
la deuxième pièce est montée coulissante selon l'axe X par rapport à la première pièce, et la troisième pièce est montée pivotante autour d'un axe Y par rapport à la deuxième pièce, l'axe Y étant perpendiculaire à l'axe X.

Un tel outil présente les mêmes avantages que ceux décrits ci-dessus et ne nécessite par ailleurs pas de mécanisme de levage séparé.

De préférence, selon l'invention, le mécanisme de levage est un vérin d'axe Z. Avantageusement, selon l'invention, l'axe X est perpendiculaire à l'axe Z. Avantageusement toujours, selon l'invention, l'extrémité distale de la troisième pièce est apte à enserrer une jambe de force dont le diamètre est compris entre 10 mm et 100 mm, de préférence dont le diamètre est compris entre 20 mm et 45 mm ou entre 45 mm et 70 mm. De façon avantageuse toujours, selon l'invention, l'extrémité distale de la troisième pièce comporte une mâchoire en deux parties et des moyens pour serrer les deux parties ensemble. De façon avantageuse toujours, selon l'invention, la mâchoire est en matière plastique, de préférence en polyoxyméthylène. De façon avantageuse toujours, selon l'invention, la deuxième pièce comporte de moyens pour bloquer la première pièce par rapport à la deuxième pièce.

### Brève description des figures

Ces aspects ainsi que d'autres aspects de l'invention seront clarifiés dans la description détaillée de modes de réalisation particuliers de l'invention, référence étant faite aux dessins des figures, dans lesquelles :
Fig. 1 montre un exemple d'outil selon l'invention et selon un premier mode de réalisation ;
Fig. 2 montre une vue en coupe selon le plan XZ de l'outil de la Fig.1 ;
Fig. 3 montre un exemple d'outil selon l'invention et selon un deuxième mode de réalisation.

Les dessins des figures ne sont ni à l'échelle, ni proportionnés. Généralement, des éléments semblables ou identiques sont dénotés par des références identiques dans les figures.

### Description détaillée de modes de réalisation de l'invention

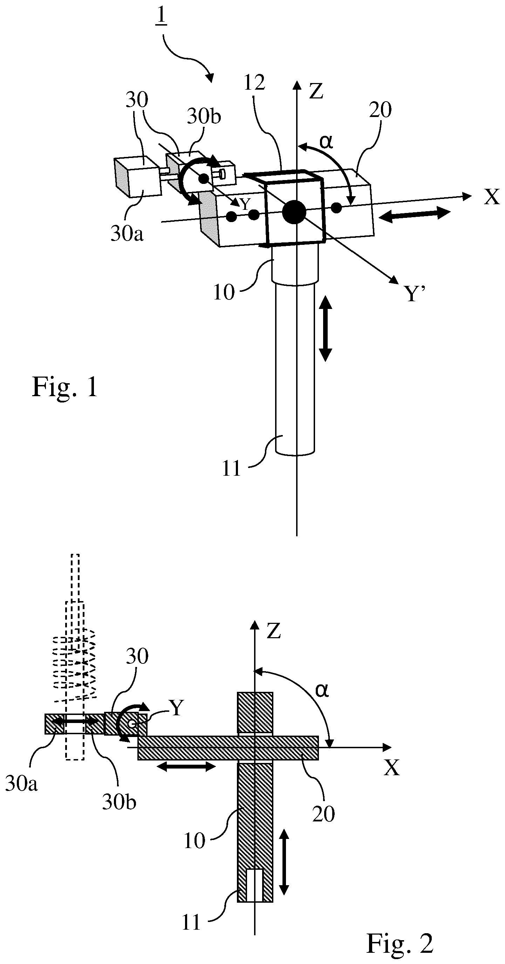

La Fig. 1 montre un exemple d'outil (1) selon l'invention et selon un premier mode de réalisation.

Comme illustré, l'outil (1) comporte une première pièce (10) s'étendant selon un axe Z vertical. Une extrémité distale inférieure (11) de la première pièce (10) est apte à être connectée à un dispositif de levage (dont le mouvement le long de l'axe Z est illustré par la double flèche). Dans ce mode de réalisation, l'outil (1) selon l'invention ne comporte pas de dispositif de levage mais il peut y être connecté. Un tel dispositif de levage peut par exemple être un vérin qui peut par exemple s'enchâsser dans l'extrémité distale inférieure (11) de l'outil (1).

L'outil (1) comporte en outre une deuxième pièce (20) s'étendant selon un axe X transversal à l'axe Z, la deuxième pièce (20) étant connectée à la première pièce (10).

L'outil (1) comporte en outre une troisième pièce (30) dont une extrémité distale est apte à enserrer la jambe de force, la troisième pièce (30) étant connectée à la deuxième pièce (20).

La deuxième pièce (20) est montée coulissante par rapport à la première pièce (10). Si la deuxième pièce (20) est de section rectangulaire, comme illustré à la Fig. 1, on peut par exemple prévoir, sur la première pièce (10), une bague (12) de section rectangulaire correspondante et dans laquelle la deuxième pièce (20) peut s'insérer pour y coulisser selon l'axe X. D'autres formes de sections peuvent bien entendu être envisagées pour la bague (12) afin de permettre le coulissement de la deuxième pièce (20) par rapport à la première pièce (10). Il s'agit dans ce cas et de préférence de sections non circulaires, afin d'éviter une rotation de la deuxième pièce (20) autour de l'axe X dans la bague (12).

Un utilisateur peut ainsi librement déplacer la deuxième pièce (20) latéralement lors de l'installation de l'outil (1), ce qui permet par exemple de rapprocher la première pièce (10) par rapport à la jambe de force et ainsi de réduire un bras de levier lors du levage de la jambe de force, et/ou de tenir compte de l'encombrement environnant.

La troisième pièce (30) est montée pivotante autour d'un axe Y par rapport à la deuxième pièce (20), l'axe Y étant perpendiculaire à l'axe X. Ceci permet de limiter les contraintes dans l'outil (1) lors du levage de la jambe de force et/ou d'avoir plus de flexibilité lors de la connexion de l'outil (1) à la jambe de force, par exemple pour tenir compte de l'encombrement de pièces mécaniques et/ou de carrosserie à proximité de la jambe de force.

L'utilisateur peut donc faire monter ou descendre l'outil (1) le long de l'axe Z par l'intermédiaire d'un dispositif de levage, et il peut aussi jouer à la fois sur le positionnement de la deuxième pièce (20) et sur le positionnement de la troisième pièce (30), une translation de la deuxième pièce (20) le long de l'axe X et/ou une rotation de la troisième pièce (30) autour de l'axe Y, permettant aisément de définir l'orientation adéquate des différentes pièces de l'outil (1) pour finalement accéder facilement à la jambe de force et enserrer cette dernière fermement et de façon sécurisée.

De préférence, l'axe X est perpendiculaire à l'axe Z.

De préférence, l'extrémité distale de la troisième pièce (30) est apte à enserrer une jambe de force dont le diamètre est compris entre 10 mm et 100 mm, de préférence dont le diamètre est compris entre 20 mm et 45 mm ou entre 45 mm et 70 mm.

De préférence, l'extrémité distale de la troisième pièce (30) comporte une mâchoire en deux parties (30a, 30b) et des moyens pour serrer les deux parties ensemble. Les moyens pour serrer les deux parties de la mâchoire ensemble peuvent par exemple comporter deux boulons disposés à respectivement deux extrémités de la mâchoire, une première partie (30b) de la mâchoire étant munie de deux trous traversants et la deuxième partie (30a) de la mâchoire étant munie de deux trous taraudés dont les pas de vis correspondent respectivement aux pas de vis des boulons. La jambe de force peut être ainsi enserrée fermement entre les deux parties de la mâchoire afin d'éviter toute retombée non volontaire de la jambe de force une fois soulevée, par exemple par glissement et/ou désengagement de la jambe de force au départ de l'outil (1).

De préférence, la mâchoire (30a, 30b) est en matière plastique. De manière plus préférée, la mâchoire est en polyoxyméthylène.

De préférence, l'outil (1) comporte des moyens pour bloquer la deuxième pièce (20) par rapport à la première pièce (10), ceci afin de ne pas permettre un mouvement relatif de la deuxième pièce (20) par rapport à la première pièce (10) et selon l'axe X lors de l'utilisation de l'outil (1), après avoir été positionné et connecté à la jambe de force. Comme illustré à la Fig.1 , la deuxième pièce (20) peut par exemple comporter une pluralité de trous dans lesquels peut s'engager sélectivement une tige mobile présente au niveau de la première pièce (10). Ce moyen de blocage, une fois activé, empêchant la deuxième pièce (20) de se déplacer selon l'axe X.

La Fig.2 montre une vue en coupe selon le plan XZ de l'outil (1) de la Fig.1.Cette vue en coupe reprend les mêmes éléments que ceux illustrés à la Fig.1 et montre en outre (en pointillés) une jambe de force prise dans la mâchoire (30a, 30b) ainsi que les trois mouvements des trois parties de l'outil (1) (translations selon les axes X et Z, rotation selon l'axe Y).

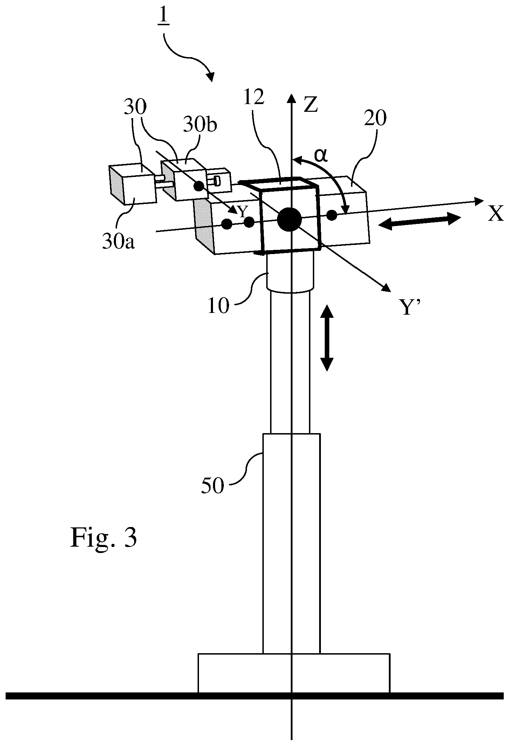

La Fig.3 montre un exemple d'outil (1) selon l'invention et selon un deuxième mode de réalisation. Ce deuxième mode de réalisation est identique au premier mode de réalisation, sauf que la première pièce (10) de l'outil (1) comprend ou intègre un mécanisme de levage selon l'axe Z.

Ce mécanisme de levage peut par exemple être un cric ou un vérin de fosse hydraulique, qui sont aptes à reposer sur le sol et à exercer un déplacement vertical en force.

La présente invention a été décrite en relation avec des modes de réalisation spécifiques, qui ont une valeur purement illustrative et ne doivent pas être considérés comme limitatifs. D'une manière générale, il apparaîtra évident pour l'homme du métier que la présente invention n'est pas limitée aux exemples illustrés et/ou décrits ci-dessus.

L'usage des verbes « comprendre », « inclure », « comporter », ou toute autre variante, ainsi que leurs conjugaisons, ne peut en aucune façon exclure la présence d'éléments autres que ceux mentionnés.

L'usage de l'article indéfini « un », « une », ou de l'article défini « le », « la » ou « l'», pour introduire un élément n'exclut pas la présence d'une pluralité de ces éléments.

## Revendications

1. Outil (1) pour soulever une jambe de force d'un amortisseur monté sur un véhicule automobile, l'outil (1) comportant :
une première pièce (10) s'étendant selon un axe Z vertical, une extrémité distale inférieure (11) de la première pièce (10) étant apte à être connectée à un dispositif de levage,
une deuxième pièce (20) s'étendant selon un axe X transversal à l'axe Z, la deuxième pièce (20) étant connectée à la première pièce (10),
une troisième pièce (30) ayant une extrémité distale apte à enserrer la jambe de force, la troisième pièce (30) étant connectée à la deuxième pièce (20), **caractérisé en ce que** la deuxième pièce (20) est montée coulissante selon l'axe X par rapport à la première pièce (10), et **en ce que** la troisième pièce (30) est montée pivotante autour d'un axe Y par rapport à la deuxième pièce (20), l'axe Y étant perpendiculaire à l'axe X.

2. Outil (1) selon la revendication 1, **caractérisé en ce que** l'axe X est perpendiculaire à l'axe Z.

3. Outil (1) selon la revendication 1 ou la revendication 2, **caractérisé en ce que** l'extrémité distale de la troisième pièce (30) est apte à enserrer une jambe de force dont le diamètre est compris entre 10 mm et 100 mm, de préférence dont le diamètre est compris entre 20 mm et 45 mm ou entre 45 mm et 70 mm.

4. Outil (1) selon la revendication 1 ou la revendication 2, **caractérisé en ce que** l'extrémité distale de la troisième pièce (30) comporte une mâchoire en deux parties (30a, 30b) et des moyens pour serrer les deux parties ensemble.

5. Outil (1) selon la revendication 4, **caractérisé en ce que** la mâchoire est en matière plastique, de préférence en polyoxyméthylène.

6. Outil (1) selon l'une quelconque des revendications précédentes, **caractérisé en ce que** l'outil (1) comporte des moyens pour bloquer la deuxième pièce (20) par rapport à la première pièce (10).

7. Outil (1) pour soulever une jambe de force d'un amortisseur monté sur un véhicule automobile, l'outil (1) comportant :
une première pièce (10) s'étendant selon un axe Z vertical,
une deuxième pièce (20) s'étendant selon un axe X transversal à l'axe Z,
la deuxième pièce (20) étant connectée à la première pièce (10),
une troisième pièce (30) ayant une extrémité distale apte à enserrer la jambe de force, la troisième pièce (30) étant connectée à la deuxième pièce (20),
**caractérisé en ce que** la première pièce (10) comporte un mécanisme de levage (50) selon l'axe Z, **en ce que** la deuxième pièce (20) est montée coulissante selon l'axe X par rapport à la première pièce (10), et **en ce que** la troisième pièce (30) est montée pivotante autour d'un axe Y par rapport à la deuxième pièce (20), l'axe Y étant perpendiculaire à l'axe X.

8. Outil (1) selon la revendication 7, **caractérisé en ce que** le mécanisme de levage (50) est un vérin d'axe Z.

9. Outil (1) selon la revendication 7 ou la revendication 8, **caractérisé en ce que** l'axe X est perpendiculaire à l'axe Z.

10. Outil (1) selon l'une quelconque des revendications 7 à 9, **caractérisé en ce que** l'extrémité distale de la troisième pièce (30) est apte à enserrer une jambe de force dont le diamètre est compris entre 10 mm et 100 mm, de préférence dont le diamètre est compris entre 20 mm et 45 mm ou entre 45 mm et 70 mm.

11. Outil (1) selon l'une quelconque des revendications 7 à 10, **caractérisé en ce que** l'extrémité distale de la troisième pièce (30) comporte une mâchoire en deux parties (30a, 30b) et des moyens pour serrer les deux parties ensemble.

12. Outil (1) selon la revendication 11, **caractérisé en ce que** la mâchoire est en matière plastique, de préférence en polyoxyméthylène.

13. Outil (1) selon l'une quelconque des revendications 7 à 12, **caractérisé en ce que** la deuxième pièce (20) comporte de moyens pour bloquer la première pièce (10) par rapport à la deuxième pièce (20).

## Patentansprüche

1. Werkzeug (1) zum Heben eines Federbeins von einem an einem Kraftfahrzeug montierten Stoßdämpfer, wobei das Werkzeug (1) umfasst: ein erstes Teil (10) das sich entlang einer vertikalen Z-Achse erstreckt, ein unteres distales Ende (11) des ersten Teils (10) das zum Anschluss an eine Hebevorrichtung geeignet ist, und ein zweites Teil (20) das sich entlang einer X-Achse quer zur Z-Achse erstreckt, wobei der zweite Teil (20) mit dem ersten Teil (10) verbunden ist, wobei ein dritter Teil (30) ein distales Ende aufweist dass das Federbein umschließen kann, und dass der dritte Teil (30) mit dem zweiten Teil (20) verbunden ist, **dadurch gekennzeichnet dass** der zweite Teil (20) entlang der X-Achse in Bezug auf den ersten Teil (10) gleitend gelagert ist, und dass der dritte Teil (30) schwenkbar um eine Y-Achse in Bezug auf den zweiten Teil (20) gelagert ist, wobei die Y-Achse senkrecht zur X-Achse verläuft.

2. Werkzeug (1) nach Anspruch 1, **dadurch gekennzeichnet, dass** die X-Achse senkrecht zur Z-Achse steht.

3. Werkzeug (1) nach Anspruch 1 oder Anspruch 2, **dadurch gekennzeichnet, dass** das distale Ende des dritten Teils (30) in der Lage ist ein Federbein mit einem Durchmesser zwischen 10 mm und 100 mm, vorzugsweise mit einem Durchmesser zwischen 20 mm und 45 mm oder zwischen 45 mm und 70 mm zu umschließen.

4. Werkzeug (1) nach Anspruch 1 oder Anspruch 2, **dadurch gekennzeichnet, dass** das distale Ende des dritten Teils (30) eine zweiteilige Backe (30a, 30b) und ein Mittel zum Zusammenklemmen der beiden Teile umfasst.

5. Werkzeug (1) nach Anspruch 4, **dadurch gekennzeichnet, dass** die Backe aus Kunststoff, vorzugsweise aus Polyoxymethylen, besteht.

6. Werkzeug (1) nach einem der vorhergehenden Ansprüche, **dadurch gekennzeichnet, dass** das Werkzeug (1) Mittel zum Blockieren des zweiten Teils (20) in Bezug auf den ersten Teil (10) umfasst.

7. Werkzeug (1) zum Heben eines Federbeins von einem an einem Kraftfahrzeug montierten Stoßdämpfer, wobei das Werkzeug (1) umfasst: ein erstes Teil (10), das sich entlang einer vertikalen Z-Achse erstreckt, ein zweites Teil (20), das sich entlang einer X-Achse quer zur Z-Achse erstreckt, wobei das zweite Teil (20) mit dem ersten Teil (10) verbunden ist, ein drittes Teil (30) mit einem distalen Ende dass das Federbein umschließen kann, wobei das dritte Teil (30) mit dem zweiten Teil (20) verbunden ist, **dadurch gekennzeichnet dass** das erste Teil (10) einen Hebemechanismus (50) entlang der Z-Achse aufweist, dass das zweite Teil (20) entlang der X-Achse in Bezug auf das erste Teil (10) gleitend gelagert ist, und dass das dritte Teil (30) schwenkbar um eine Y-Achse in Bezug auf das zweite Teil (20) gelagert ist, wobei die Y-Achse senkrecht zur X-Achse verläuft.

8. Werkzeug (1) nach Anspruch 7, **dadurch gekennzeichnet, dass** der Hubmechanismus (50) ein Zylinder der Z-Achse ist.

9. Werkzeug (1) nach Anspruch 7 oder Anspruch 8, **dadurch gekennzeichnet, dass** die X-Achse senkrecht zur Z-Achse steht.

10. Werkzeug (1) nach einem der Ansprüche 7 bis 9, **dadurch gekennzeichnet, dass** das distale Ende des dritten Teils (30) in der Lage ist, ein Federbein mit einem Durchmesser zwischen 10 mm und 100 mm, vorzugsweise mit einem Durchmesser zwischen 20 mm und 45 mm oder zwischen 45 mm und 70 mm, zu umschließen.

11. Werkzeug (1) nach einem der Ansprüche 7 bis 10, **dadurch gekennzeichnet, dass** das distale Ende des dritten Teils (30) eine zweiteilige Backe (30a, 30b) und Mittel zum Zusammenklemmen der beiden Teile umfasst.

12. Werkzeug (1) nach Anspruch 11, **dadurch gekennzeichnet, dass** die Backe aus Kunststoff, vorzugsweise aus Polyoxymethylen, besteht.

13. Werkzeug (1) nach einem der Ansprüche 7 bis 12, **dadurch gekennzeichnet, dass** der zweite Teil (20) Mittel zum Blockieren des ersten Teils (10) in Bezug auf den zweiten Teil (20) umfasst.

## Claims

1. Tool (1) for lifting a strut from a shock absorber mounted on a motor vehicle, the tool (1) comprising: a first part (10) extending along a vertical Z-axis, a lower distal end (11) of the first part (10) being suitable for connection to a lifting device, a second part (20) extending along an X-axis transverse to the Z axis, the second part (20) being connected to the first part (10), a third part (30) having a distal end capable of enclosing the strut, the third part (30) being connected to the second part (20), **characterized in that** the second part (20) is mounted sliding along the X-axis with respect to the first part (10), and **in that** the third part (30) is mounted pivoting about a Y-axis with respect to the second part (20), the Y-axis being perpendicular to the X-axis.

2. Tool (1) according to claim 1, **characterized in that** the X-axis is perpendicular to the Z-axis.

3. Tool (1) according to claim 1 or claim 2, **characterized in that** the distal end of the third part (30) is capable of enclosing a strut with a diameter of between 10 mm and 100 mm, preferably with a diameter of between 20 mm and 45 mm or between 45 mm and 70 mm.

4. Tool (1) according to claim 1 or claim 2, **characterized in that** the distal end of the third part (30) comprises a two-part jaw (30a, 30b) and means for clamping the two parts together.

5. Tool (1) according to claim 4, **characterized in that** the jaw is made of plastic, preferably of polyoxymethylene.

6. Tool (1) according to any one of the preceding claims, **characterized in that** the tool (1) comprises means for blocking the second part (20) in relation to the first part (10).

7. Tool (1) for lifting a strut from a shock absorber mounted on a motor vehicle, the tool (1) comprising: a first part (10) extending along a vertical Z-axis, a second part (20) extending along an X-axis transverse to the Z-axis, the second part (20) being connected to the first part (10), a third part (30) having a distal end capable of enclosing the strut, the third part (30) being connected to the second part (20), **characterized in that** the first part (10) has a lifting mechanism (50) along the Z-axis, **in that** the second part (20) is mounted sliding along the X-axis in relation to the first part (10), and **in that** the third part (30) is mounted pivoting around a Y-axis with respect to the second part (20), the Y axis being perpendicular to the X axis.

8. Tool (1) according to claim 7, **characterized in that** the lifting mechanism (50) is a Z-axis cylinder.

9. Tool (1) according to claim 7 or claim 8, **characterized in that** the X-axis is perpendicular to the Z-axis.

10. Tool (1) according to any one of claims 7 to 9, **characterized in that** the distal end of the third part (30) is capable of enclosing a strut with a diameter of between 10 mm and 100 mm, preferably with a diameter of between 20 mm and 45 mm or between 45 mm and 70 mm.

11. Tool (1) according to any one of claims 7 to 10, **characterized in that** the distal end of the third part (30) comprises a two-part jaw (30a, 30b) and means for clamping the two parts together.

12. Tool (1) according to claim 11, **characterized in that** the jaw is made of plastic, preferably of polyoxymethylene.

13. Tool (1) according to any one of claims 7 to 12, **characterized in that** the second part (20) comprises means for blocking the first part (10) in relation to the second part (20).
